# FASCICULE DE BREVET EUROPEEN

(11) **EP 4 155 575 B1**
(45) Date de publication et mention de la délivrance du brevet: **01.05.2024**
(21) Numéro de dépôt: 22197644.2
(22) Date de dépôt: 26.09.2022
(51) Int. Cl.: F16H 1/28, F02C 7/36, F16H 57/023, F02K 1/82, F16H 57/00

(54) **PROCÉDÉ DE FABRICATION AMÉLIORÉ D'UN RÉDUCTEUR MÉCANIQUE POUR TURBOMACHINE D'AÉRONEF**
VERBESSERTES HERSTELLUNGSVERFAHREN EINES MECHANISCHEN REDUZIERGETRIEBES FÜR EINE FLUGZEUGTURBOMASCHINE
IMPROVED METHOD FOR MANUFACTURING A MECHANICAL REDUCTION GEAR FOR AN AIRCRAFT TURBINE ENGINE

(30) Priorité: 28.09.2021 FR 2110204
(43) Date de publication de la demande: 29.03.2023
(73) Titulaire: Safran Transmission Systems, 92700 Colombes (FR)
(72) Inventeur: SIMON, Adrien Louis, 77550 MOISSY-CRAMAYEL (FR); GHRIBI, Dhafer, 77550 MOISSY-CRAMAYEL (FR)
(74) Mandataire: Cabinet Beau de Loménie

(56) Documents cités:
- EP-A1- 3 376 072
- CN-A- 102 720 585
- US-A- 5 864 950
- US-A1- 2021 229 796

## Description

### Domaine Technique

La présente invention concerne le domaine des réducteurs mécaniques pour turbomachine d'aéronef, tels que des réducteurs à train épicycloïdal entre autres.

La présente invention concerne en particulier un procédé de fabrication d'un tel réducteur mécanique.

### Technique antérieure

Les réducteurs mécaniques sont couramment utilisés en mécanique, notamment dans le domaine de l'aéronautique. Leur rôle est de modifier le rapport de vitesse et de couple entre un axe d'entrée et un axe de sortie d'un système mécanique.

Les nouvelles générations de turbomachines à plusieurs flux, notamment celles ayant un haut taux de dilution, comportent un réducteur mécanique pour entraîner l'arbre d'une soufflante ou d'une hélice. De manière usuelle, le réducteur permet de transformer la vitesse de rotation, dite rapide, de l'arbre d'une turbine de puissance, en une vitesse de rotation plus lente pour l'arbre entraînant la soufflante.

Un tel réducteur comprend classiquement un pignon central, dit « pignon solaire », une couronne externe, et des pignons, dits « pignons satellites », qui sont en prise entre le pignon solaire et la couronne externe. Les pignons satellites sont maintenus par un châssis appelé porte-satellites. Le pignon solaire, la couronne externe et le porte-satellites sont des organes planétaires, car leurs axes de révolution coïncident avec l'axe longitudinal de la turbomachine. En revanche, les pignons satellites ont chacun un axe de révolution différents de l'axe de révolution de la turbomachine, et répartis à intervalles réguliers sur le même diamètre de fonctionnement autour, de l'axe des roues planétaires. Ces axes des pignons satellites sont parallèles à l'axe longitudinal de la turbomachine.

Il existe plusieurs architectures de réducteur mécanique. Les réducteurs mécaniques connus, utilisés dans les turbomachines à double flux, sont de type planétaire ou épicycloïdal. Il existe également, dans d'autres applications, des architectures dites différentielles. Ces différents types de réducteurs mécaniques se différencient de la manière suivante :
- Sur un réducteur planétaire, le porte-satellite est fixe et la couronne externe constitue l'arbre de sortie du dispositif, qui tourne dans le sens inverse du pignon solaire.
- Sur un réducteur épicycloïdal, la couronne externe est fixe et le porte-satellites constitue l'arbre de sortie du dispositif, qui tourne dans le même sens que le pignon solaire.
- Sur un réducteur différentiel, aucun élément n'est fixé en rotation. La couronne externe tourne dans le sens contraire du pignon solaire et du porte-satellites.

Par ailleurs, les réducteurs peuvent comprendre un ou plusieurs étages d'engrènement. Cet engrènement peut être assuré de différentes manières, par exemple par contact, par friction ou encore par champs magnétique. En outre, il existe plusieurs types d'engrènement par contact, notamment avec des dentures droites, hélicoïdales ou en chevron. US 2021/229796 A1 divulgue un exemple de réducteur à plusieurs étages.

L'alignement des dentures des différents pignons constituant les réducteurs mécaniques coaxiaux à plusieurs étages est un aspect essentiel dans la conception, la fabrication et le montage des réducteurs mécaniques dans les moteurs d'aéronef. En effet, en cas de non alignement, une situation dans laquelle un seul des pignons satellites engrène peut se produire. Dans cette situation, il devient donc le seul chemin de puissance, et reprend toute la charge. Cela peut impliquer des architectures plus encombrantes au niveau de la conception ou des défaillances en fonctionnement.

Des solutions telles que le comptage des dents et le réglage axial par cales, lors du montage du réducteur mécanique, existent, mais leur efficacité est limitée. En outre, l'utilisation de cales n'est valable que dans le cas où au moins une des dentures est hélicoïdale.

Il existe donc un besoin pour un procédé de fabrication de réducteur mécanique permettant de remédier au moins en partie aux inconvénients précités.

### Exposé de l'invention

La présente invention concerne un procédé de fabrication d'un réducteur mécanique pour turbomachine d'aéronef, dans lequel N est un nombre prédéterminé tel que N≥3, le réducteur mécanique comprenant un pignon central et une couronne externe coaxiaux l'un avec l'autre autour d'un axe de rotation principal, et N pignons satellites, chacun étant mobile autour d'un axe de rotation secondaire parallèle à l'axe de rotation principal et chacun comprenant un premier étage engrenant avec le pignon central, et un deuxième étage de diamètre inférieur au diamètre du premier étage engrenant avec la couronne externe, le procédé comprenant :
- le marquage d'assemblage de pièces, dans lequel N dents du pignon central et N paires de dents du premier étage de chaque pignon satellite sont marquées, et/ou N dents du deuxième étage de chaque pignon satellite sont marquées et N paires de dents de la couronne externe sont marquées, les N pignons satellites étant chacun marqués de manière identique,
- l'assemblage du réducteur mécanique, de telle sorte que les dents des paires de dents marquées du premier étage de chaque pignon satellite soient disposées de part et d'autre d'une dent marquée du pignon central et/ou de telle sorte que les dents des paires de dents marquées de la couronne externe soient disposées de part et d'autre d'une dent marquée du deuxième étage de chaque pignon satellite.

Dans la présente invention, les termes « radial », « axial » et leurs dérivés s'entendent par rapport aux axes de rotation principal et secondaire. Ainsi, une direction radiale correspond à une direction perpendiculaire à l'axe de rotation principal ou à l'axe de rotation secondaire. En outre, une face axiale d'un pignon correspond à une face selon une vue parallèle à l'axe de rotation principal ou à l'axe de rotation secondaire, et comprise dans un plan perpendiculaire à ces axes.

L'axe de rotation secondaire de chaque pignon satellite est parallèle à l'axe de rotation principal, en étant décalé radialement par rapport à celui-ci. Ainsi, les axes de rotations secondaires des pignons satellites sont disposés radialement à l'extérieur du pignon central, en étant parallèles à l'axe principal et en gravitant autour de celui-ci.

Dans la présente invention, le pignon central et/ou le deuxième étage de chaque pignon satellite comprennent autant de dents marquées que le réducteur mécanique comprend de pignons satellites. Ainsi, lorsque le réducteur mécanique comprend trois pignons satellites, l'étape de marquage d'assemblage comprend par exemple le marquage de trois dents du pignon central, en particulier une face axiale de ces dents. Le marquage d'une dent peut prendre tous types de formes, permettant à un utilisateur, disposé face à la face axiale du pignon central comprenant les dents marquées, de repérer lesdites dents marquées.

Les dents sont de préférence marquées à intervalles réguliers. On comprend par « marquées à intervalles réguliers » que le long de sa circonférence, le pignon central ou le deuxième étage des pignons satellites présentent un nombre sensiblement identique de dents non marquées entre deux dents marquées. En d'autres termes, lorsque trois dents du pignon central par exemple sont marquées lors du marquage d'assemblage, les dents marquées sont disposées selon des angles sensiblement égaux à 120° le long de la circonférence du pignon central, étant entendu que ledit pignon n'a pas nécessairement un nombre de dents multiple de trois.

On comprend en outre qu'une paire de dents marquées correspond à une configuration dans laquelle deux dents successives, selon la direction circonférentielle du pignon satellite, sont marquées. Par ailleurs, lorsque le réducteur mécanique comprend trois pignons satellites, le premier étage de chacun des trois satellites comprend également trois paires de dents marquées. Ainsi, lors de l'assemblage du réducteur mécanique, les pignons satellites peuvent être disposés autour du pignon central, de telle sorte que les dents marquées des paires de dents marquées du premier étage de chaque pignon satellite soient disposées de part et d'autre d'une dent marquée du pignon central. En d'autres termes, les pignons satellites sont disposés de manière à faire engrener les dents du premier étage de chacun d'eux avec le pignon central, et de manière à ce que chacune des dents marquées du pignon central soit disposée entre deux dents marquées d'un pignon satellite. On notera que les paires de dents marquées peuvent également être formées sur le pignon central de manière à être disposées de part et d'autre d'une dent marquée du premier étage du pignon satellite.

On notera également que selon la configuration du réducteur mécanique, le marquage d'assemblage peut être effectué sur le pignon central et le premier étage de chaque pignon satellite uniquement, ou sur la couronne externe et le deuxième étage de chaque pignon satellite uniquement. Quelle que soit la configuration, le marquage d'assemblage peut également être effectué sur chacune de ces roues (pignon central, couronne externe, premier et deuxième étage des pignons). En outre, les pignons satellites sont tous marqués de la même façon. Ainsi, chacun des N pignons satellites comprend un même nombre de dents et/ou de paires de dents marquées, disposées de la même façon.

Ce procédé permet ainsi, par l'étape de marquage d'assemblage réalisée avant le montage, d'identifier précisément la position angulaire des différents pignons entre eux, et ainsi d'assurer la montabilité des différents éléments composant le réducteur mécanique. En effet, dans un positionnement non optimal, le fait de décaler une dent d'un des pignons satellites par rapport au pignon central par exemple, pourrait engendrer des surcharges sur certaines dents lors du fonctionnement du réducteur. Le montage précis permis par ce procédé permet de conserver des jeux suffisants entre les différentes dents s'imbriquant entre elles lors de l'assemblage de telle sorte que, lors du fonctionnement du réducteur mécanique, les charges soient réparties uniformément sur les dents des différents pignons.

Dans certains modes de réalisation, le procédé comprend, avant le marquage d'assemblage, une étape préliminaire de marquage d'orientation de pièces dans lequel une dent du premier et du deuxième étage de chaque pignon satellite est marquée, de telle sorte que l'orientation des dents marquées du premier et du deuxième étage l'une par rapport à l'autre soit identique pour chaque pignon satellite.

Le fait de marquer une dent du premier étage et du deuxième étage de chaque pignon satellite lors de l'étape de marquage d'orientation, de telle sorte que l'orientation de ces dents marquées l'une par rapport à l'autre soit identique pour chaque pignon satellite, permet de s'assurer, en mesurant ladite orientation sur chaque pignon, que les pignons satellites ont été fabriqués de manière à être identiques les uns aux autres. En particulier, il est possible de fabriquer et de marquer un premier pignon satellite, et de fabriquer d'autres pignons satellites identiques au premier pignon satellite, les marquages de ce dernier servant de référence.

Ce procédé permet ainsi, d'une part par le marquage d'orientation permettant de s'assurer que tous les pignons satellites sont identiques, et ensuite par l'étape de marquage d'assemblage réalisée avant le montage, d'identifier précisément la position angulaire des différents pignons entre eux. En particulier, le marquage d'orientation préalable permet d'améliorer encore cette précision.

Dans certains modes de réalisation, le marquage d'orientation est réalisé sur une première face de chaque pignon satellite, et le marquage d'assemblage est réalisé sur une deuxième face, opposée à la première face, de chaque pignon satellite.

La première et la deuxième face sont des faces axiales des pignons satellites opposées l'une à l'autre. En d'autres termes, chaque pignon satellite comprend des roues dentées sur chacune de ses faces opposées. Le fait d'effectuer le marquage d'orientation sur une première face, puis le marquage d'assemblage sur une deuxième face du pignon, permet de distinguer les marquages d'assemblage sans risque de confusion avec les marquages de fabrication. Cela permet d'améliorer la fiabilité du procédé.

Dans certains modes de réalisation, le marquage d'orientation comprend, pour chaque pignon satellite, la fabrication des dents du premier étage, le marquage d'une dent du premier étage fabriqué, la fabrication des dents du deuxième étage puis, le marquage d'une dent du deuxième étage.

Dans certains modes de réalisation, un angle mesuré sur chaque pignon satellite entre une droite passant par l'axe de rotation secondaire des pignons satellites et la dent marquée du premier étage, et une droite passant par l'axe de rotation secondaire des pignons satellites et la dent marquée du deuxième étage, est identique pour chacun desdits pignons satellites.

En d'autres termes, les dents du deuxième étage de chaque pignon satellite sont orientées selon un angle prédéterminé par rapport aux dents du premier étage de chaque pignon satellite. Cet angle étant le même pour chaque pignon satellite, et étant repéré et mesuré par les dents marqués sur le premier et sur le deuxième étage de chaque pignon satellite, les marquages de fabrication réalisés sur chacun des pignons satellites constituent ainsi un repère fiable et mesurable, permettant de s'assurer que tous les pignons satellites sont identiques les uns aux autres, en d'autres termes, que les dents de leur premier et deuxième étage respectifs soient orientées de la même façon. Cela permet de faciliter l'étape d'assemblage ultérieur et d'améliorer la précision du montage.

Dans certains modes de réalisation, le marquage d'orientation comprend, pour chaque pignon satellite, la fabrication des dents du deuxième étage, le marquage d'une dent du deuxième étage fabriqué, la fabrication des dents du premier étage puis, le marquage d'une dent du premier étage.

En d'autres termes, il est possible de fabriquer et de marquer l'un du premier étage ou du deuxième étage de chaque pignon satellite en premier lieu, puis l'autre du premier étage ou du deuxième étage en second lieu.

Dans certains modes de réalisation, lors du marquage d'orientation, au moins deux dents du premier étage ou du deuxième étage de chaque pignon satellite sont marquées. Il est ainsi possible de mesurer l'orientation du deuxième étage par rapport au premier étage, par au moins deux angles formées entre le marquage du deuxième étage (ou du premier étage) et les au moins deux marquages du premier étage (ou du deuxième étage), et ainsi d'améliorer encore la précision des mesures.

Dans certains modes de réalisation, la couronne externe comprend deux parties distinctes, le marquage d'assemblage comprenant dans un premier temps le marquage de N dents du pignon central, de préférence à intervalles réguliers, autour de l'axe de rotation principal, et de N paires de dents du premier étage de chaque pignon satellite, et l'assemblage du réducteur mécanique comprenant dans un premier temps la disposition des N pignons satellites autour du pignon central, de telle sorte que les dents des paires de dents marquées du premier étage de chaque pignon satellite soient disposées de part et d'autre d'une dent marquée du pignon central.

Dans cette configuration, la couronne externe comprend une première partie destinée à engrener avec les dents des deuxièmes étages sur la première face des pignons satellites, et une deuxième partie distinct de la première partie, destinée à engrener avec les dents des deuxièmes étages sur la deuxième face des pignons satellites. Dans ce cas de figure, lors de l'étape d'assemblage, les pignons satellites sont disposés dans un premier temps autour du pignon central qui est de préférence monobloc, puis la première et la deuxième partie de la couronne externe sont disposées autour des deuxièmes étages des pignons satellites. Par conséquent, il est nécessaire, lors de l'étape de marquage préalable, de marquer les N dents du pignon central, et les N paires de dents du premier étage de chaque pignon satellite dans un premier temps. En effet, les pignons satellites sont positionnés par rapport au pignon central qui est monobloc afin d'améliorer la précision du montage, contrairement à un positionnement par rapport aux deux parties distincts de la couronne externe, qui augmenterait le risque d'imprécisions à l'assemblage. Optionnellement, il est également possible de marquer également N dents des deuxièmes étages et N paires de dents de la couronne externe. Ce marquage additionnel permet une vérification supplémentaire, à la fin de l'assemblage, permettant de s'assurer que le montage a été correctement effectué.

Dans certains modes de réalisation, le pignon central comprend deux parties distinctes, le marquage d'assemblage comprenant dans un premier temps le marquage de N dents du deuxième étage de chaque pignon satellite, de préférence à intervalles réguliers, autour de l'axe de rotation secondaire, et de N paires de dents de la couronne externe, et l'assemblage du réducteur mécanique comprenant dans un premier temps la disposition des N pignons satellites à l'intérieur de la couronne externe, de telle sorte que les dents des paires de dents marquées de la couronne externe soient disposées de part et d'autre d'une dent marquée du deuxième étage de chaque pignon satellite.

Dans cette configuration, le pignon central comprend une première partie destinée à engrener avec les dents des premiers étages sur la première face des pignons satellites, et une deuxième partie distincte de la première partie, destinée à engrener avec les dents des premiers étages sur la deuxième face des pignons satellites. Dans ce cas de figure, lors de l'étape d'assemblage, les pignons satellites sont disposés dans un premier temps à l'intérieur de la couronne externe qui est de préférence monobloc, puis la première et la deuxième partie du pignon central sont disposées entre les premiers étages des pignons satellites. Par conséquent, il est nécessaire, lors de l'étape de marquage préalable, de marquer les N dents du deuxième étage de chaque pignon satellite, et les N paires de dents de la couronne externe dans un premier temps. En effet, les pignons satellites sont positionnés par rapport à la couronne externe qui est monobloc afin d'améliorer la précision du montage, contrairement à un positionnement par rapport aux deux parties distincts du pignon central, qui augmenterait le risque d'imprécisions à l'assemblage. Il est également possible de marquer, en plus, N dents du pignon central et N paires de dents des premiers étages. Cela permet une vérification supplémentaire, à la fin de l'assemblage, permettant de s'assurer que le montage a été correctement effectué.

Dans certains modes de réalisation, le marquage d'assemblage comprend le marquage d'au moins une première dent du deuxième étage de chaque pignon satellite, puis d'au moins une deuxième dent et d'au moins une troisième dent, à intervalles sensiblement réguliers, à partir de la première dent du deuxième étage du pignon satellite.

La première dent marquée du deuxième étage sert ainsi de repère à partir duquel une deuxième dent, une troisième dent ou davantage, sont également marquées. Les dents et les paires de dents des autres pignons et de la couronne peuvent être marquées de la même façon. Il est ainsi possible de repérer aisément la position des dents lors de l'assemblage, et d'améliorer par conséquent l'alignement des pignons entre eux.

Dans certains modes de réalisation, le marquage d'assemblage comprend le marquage d'au moins un premier motif de marquage, au moins un deuxième motif de marquage différent du premier motif de marquage, et au moins un troisième motif de marquage différent du premier et du deuxième motif de marquage, les dents étant marquées de telle sorte que, lors de l'assemblage du réducteur mécanique, les dents d'une paire de dents marquées présentent un motif de marquage identique au motif de marquage de la dent marquée disposée entre lesdites dents marquées de la paire de dents marquées.

En d'autres termes, au moment de l'assemblage, le motif d'une dent marquée du pignon central, par exemple, est identique au motif des deux dents de la paire de dents marquées du premier étage du pignon satellite, entre lesquelles elles se trouvent. De préférence, le nombre de motifs différents existant est égal au nombre de pignons satellites que compte le réducteur. Il est ainsi possible de déterminer, lors du montage du réducteur mécanique, la position exacte, radialement et dans la direction circonférentielle, dans laquelle chaque pignon doit se trouver, afin d'assurer l'alignement des différentes pièces entre elles à la fin du montage et lors du fonctionnement du réducteur.

Dans certains modes de réalisation, le marquage d'une dent est réalisé par la formation d'un poinçon sur une face axiale de la dent.

Un poinçon mécanique réalisé par usinage par l'intermédiaire d'une fraise boule, et permettant de marquer localement la surface de la dent, sur la face axiale de celle-ci, peut par exemple être utilisé. Cela permet, de manière simple, de réaliser marquage, et donc un repère visible sur la face de la dent.

Dans certains modes de réalisation, le premier motif de marquage comprend un poinçon, le deuxième motif de marquage comprend deux poinçons, et le troisième motif de marquage comprend trois poinçons.

II est ainsi possible de réaliser aisément des motifs de marquage différents les uns des autres.

Dans certains modes de réalisation, le réducteur mécanique comprend trois pignons satellites, trois dents du pignon central et/ou du deuxième étage de chaque pignon satellite étant marquées chacune sensiblement à 120° l'une de l'autre.

De manière alternative, le réducteur mécanique peut comprendre quatre pignons satellites, quatre dents du pignon central et/ou du deuxième étage de chaque pignon satellite étant marquées chacune sensiblement à 90° l'une de l'autre autour de l'axe de rotation principal (ou de l'axe de rotation secondaire), ou encore cinq pignons satellites, cinq dents du pignon central et/ou du deuxième étage de chaque pignon satellite étant marquées chacune sensiblement à 72° l'une de l'autre autour de l'axe de rotation principal (ou de l'axe de rotation secondaire).

Dans certains modes de réalisation, le réducteur mécanique est un réducteur à train épicycloïdal.

De manière alternative, le réducteur mécanique peut être un réducteur planétaire, ou un réducteur différentiel. On notera en outre que l'invention s'applique aux réducteurs mécaniques présentant des dentures droites, hélicoïdales ou en chevron, et comprenant des porte-satellites monoblocs ou de type « cage + porte-cage ». L'invention est également compatible avec tous types de palier satellite, pouvant comprendre un élément roulant ou un palier hydrodynamique.

Le présent exposé concerne également un réducteur mécanique pour turbomachine d'aéronef, comprenant un pignon central et une couronne externe coaxiaux l'un avec l'autre autour d'un axe de rotation principal, et N pignons satellites, où N≥3, chacun mobile autour d'un axe de rotation secondaire parallèle à l'axe de rotation principal, chaque pignon satellite comprenant un premier étage engrenant avec le pignon central, et un deuxième étage de diamètre inférieur au diamètre du premier étage engrenant avec la couronne externe, dans lequel N dents du pignon central et/ou du deuxième étage de chaque pignon satellite, disposées intervalles réguliers, comprennent un marquage, et N paire de dents du premier étage de chaque pignon satellite et/ou de la couronne externe comprend un marquage, les dents de la paire de dents marquées du premier étage de chaque pignon satellite étant disposées de part et d'autre d'une dent marquée du pignon central.

Ainsi, en cas d'opération nécessitant le démontage, puis le remontage du réducteur mécanique, les marquages présents sur les dents permettent d'ajuster l'orientation des différents pignons entre eux, et ainsi d'améliorer leur alignement. Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue en perspective d'un réducteur mécanique après fabrication selon le procédé de la présente invention,
[Fig. 2] La figure 2 représente une vue de face du réducteur mécanique de la figure 1,
[Fig. 3] La figure 3 représente une vue de face d'un pignon satellite après une étape de marquage d'orientation,
[Fig. 4] La figure 4 représente une vue de face de la face opposée du pignon satellite de la figure 3, après une étape de marquage d'assemblage,
[Fig. 5] La figure 5 représente une vue de face d'un pignon central après l'étape de marquage d'assemblage,
[Fig. 6] La figure 6 représente le réducteur mécanique de la figure 2, avec une vue détaillée du pignon central, et une vue détaillée des dents marquées engrenant entre elles de la couronne externe et d'un pignon satellite,
[Fig. 7] La figure 7 représente les différentes étapes d'un procédé de fabrication d'un réducteur mécanique selon la présente invention.

### Description des modes de réalisation

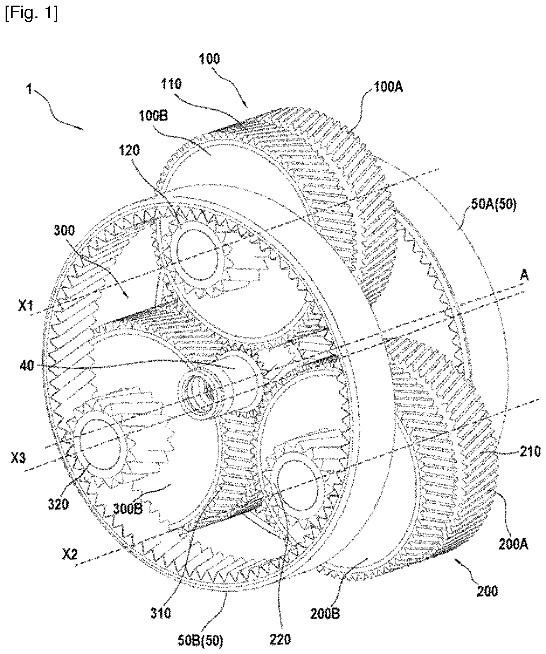

La figure 1 représente une vue en perspective d'un réducteur mécanique 1 à train planétaire double étage obtenu par un procédé de fabrication conforme à la présente invention.

Le réducteur mécanique 1 est configuré pour être disposé dans une turbomachine, par exemple une turbomachine à double flux, et pour entraîner l'arbre d'une soufflante ou d'hélice de la turbomachine (non représentée). En particulier, le réducteur mécanique 1 permet de transformer la vitesse de rotation de l'arbre d'une turbine de puissance, en une vitesse de rotation plus lente pour l'arbre entraînant la soufflante. Par conséquent, selon le présent exposé, l'axe de rotation principal A, autour duquel s'étendent le pignon central 40 et la couronne externe 50, correspond à l'axe de rotation de la soufflante, lorsque le réducteur est disposé dans une turbomachine.

Dans la suite de l'exposé, les termes « radial », « axial » et leurs dérivés s'entendent par rapport à l'axe de rotation principal A et aux axes de rotation secondaires X1, X2, X3 décrits dans la suite de l'exposé.

Le réducteur mécanique 1 comprend un pignon central 40, ou pignon solaire, comprenant une pluralité de dents sur sa face radialement externe et sur deux rangées, et une couronne externe 50 comprenant une pluralité de dents sur sa face radialement interne. Le pignon central 40 et la couronne externe 50 sont coaxiaux et axisymétriques autour de l'axe de rotation principal A. On notera que dans l'exemple non limitatif présenté en référence à la figure 1, le réducteur mécanique 1 est un réducteur à deux étages, dans lequel la couronne 50 comprend deux parties 50A, 50B.

Dans cet exemple, le réducteur mécanique 1 comprend en outre trois pignons satellites 100, 200, 300, chacun étant disposé entre le pignon central 40 et la couronne externe 50, en étant en prise avec ces derniers. Plus précisément, chaque pignon satellite comprend deux faces axiales symétriques engrenant chacune avec une des parties 50A, 50B de la couronne externe 50, et avec une rangée de dents du pignon central 40.

Par ailleurs, chaque face axiale de chaque pignon satellite comprend deux étages dentés. Plus précisément, sur chacune de leurs faces axiales, le premier pignon satellite 100 comprend un premier étage 110 et un deuxième étage 120, le deuxième pignon satellite 200 comprend un premier étage 210 et un deuxième étage 220, et le troisième pignon satellite 300 comprend un premier étage 310 et un deuxième étage 320. Pour chacun de ces pignons satellites, le premier étage présente un diamètre supérieur à celui du deuxième étage. Le premier étage 110, 210, 310 de chaque face axiale engrène avec une rangée des dents du pignon central 40, et le deuxième étage 120, 220, 320 de chaque face axiale engrène avec les dents d'une des parties 50A, 50B de la couronne externe 50.

On notera par ailleurs que les faces axiales de chaque pignon satellite 100, 200, 300, sont nommées respectivement face de fabrication et face d'assemblage dans le cadre du procédé selon l'invention. En particulier, le premier pignon satellite 100 comprend une face de fabrication 100A et une face d'assemblage 100B, le deuxième pignon satellite 200 comprend une face de fabrication 200A et une face d'assemblage 200B, et le troisième pignon satellite 300 comprend une face de fabrication (non visible sur la figure 1) et une face d'assemblage 300B.

En outre, le premier pignon satellite 100 est axisymétrique et mobile autour d'un premier axe de rotation secondaire X1. De même, le deuxième pignon satellite 200 est axisymétrique et mobile autour d'un deuxième axe de rotation secondaire X2, et le troisième pignon satellite 300 est axisymétrique et mobile autour d'un troisième axe de rotation secondaire X3. Chacun du premier, du deuxième, et du troisième axe de rotation secondaire X1, X2, X3 est parallèle à l'axe de rotation principal A, et gravite autour de ce dernier lors du fonctionnement du réducteur mécanique 1. Les axes de rotation secondaire X1, X2, X3 sont en outre équidistants à l'axe de rotation principal A. Le réducteur mécanique 1 peut également comprendre un porte-satellite (non illustré) servant de châssis maintenant les pignons satellites à leur position respective.

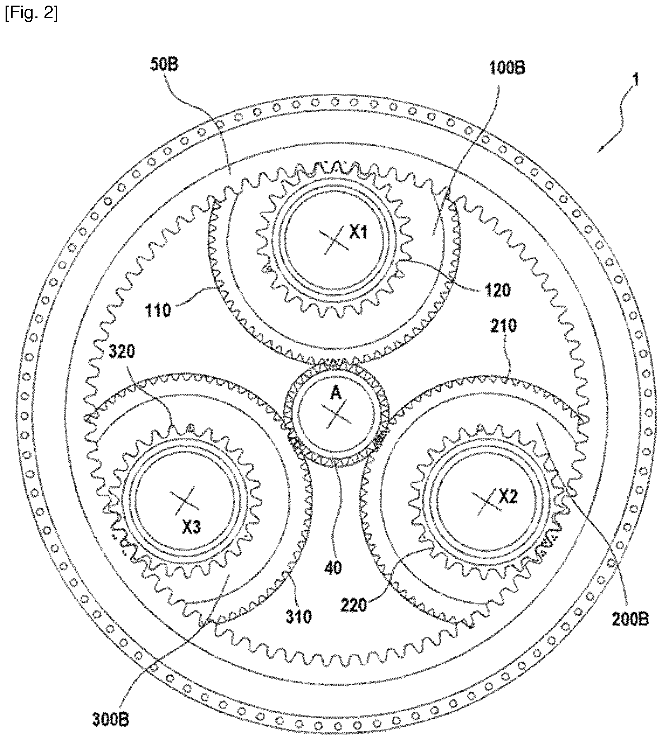

La figure 2 représente le réducteur mécanique 1 de la figure 1 dans une vue parallèle à l'axe de rotation principal A du réducteur mécanique 1, du côté des faces d'assemblage 100B, 200B, 300B des pignons satellites. On comprendra que la figure 2 représente le réducteur mécanique 1 à la fin de l'assemblage des différents éléments composant ce réducteur, dans leur position initiale, c'est-à-dire avant toute rotation de ces éléments, les marquages décrits dans la suite de l'exposé étant visibles.

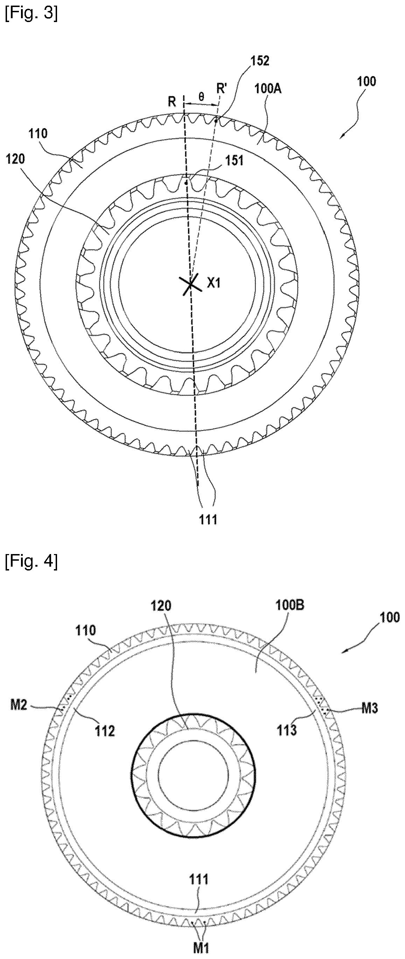

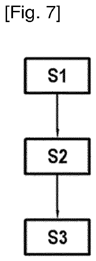

Un procédé de fabrication du réducteur mécanique 1 représenté sur les figures 1 et 2, selon un mode de réalisation de la présente invention, va être décrit en référence aux figures 3 à 7.

Une première étape du procédé (étape S1) comprend le marquage d'orientation sur chaque pignon satellite 100, 200, 300, réalisé sur la face de fabrication des pignons satellites. Dans un souci de concision, cette étape est décrite uniquement en référence au premier pignon satellite 100 illustré sur la figure 3, en particulier à la face de fabrication 100A de ce dernier, mais s'applique cependant à chacun des trois pignons satellites. Au cours de cette étape, après la fabrication des dents du deuxième étage 120, par exemple, une première dent 151 est marquée sur le deuxième étage 120 du premier pignon satellite 100. Pour ce faire, un poinçon est réalisé sur une face axiale d'une dent 151 du deuxième étage 120. Ensuite, les dents du premier étage 110 sont fabriquées, et une face axiale d'une dent 152 du premier étage 110 est marquée, de telle sorte qu'un axe radial R passant par le centre du pignon 100, c'est-à-dire par l'axe de rotation secondaire X1, et par la dent 151 marquée du deuxième étage 120, et un axe R' passant par le centre du pignon 100 et par la dent 152 marquée du premier étage 110, forment un angle θ prédéterminé et mesurable.

Les deux autres pignons satellites 200, 300 sont ensuite fabriqués selon le même processus, de telle sorte que lors de la fabrication du premier étage, les dents du premier étage soient orientées par rapport aux dents du deuxième étage déjà fabriqué, de la même façon que pour le premier pignon satellite 100. Pour ce faire, un modèle numérique des pignons 200, 300 est utilisé pour programmer la machine-outil, avant la fabrication, de telle sorte qu'une dent du premier étage et une dent du deuxième étage forment, l'une par rapport à l'autre, le même angle θ que pour le premier pignon 100. Les pignons 200, 300 sont ainsi fabriqués, et des poinçons réalisés aux mêmes endroits que sur le premier pignon 100 permettent de s'assurer que l'angle θ mesuré sur chaque pignon est identique. Le premier pignon 100 sert ainsi de référence, à partir de laquelle les autres pignons sont fabriqués, de manière à ce que les trois pignons satellites 100, 200, 300 soient strictement identiques.

On notera que davantage de dents peuvent être marquées, et davantage d'angles peuvent être mesurés, afin d'améliorer encore la précision de la fabrication. De plus, il également possible de fabriquer et marquer en premier lieu le premier étage 110, puis le deuxième étage 120. On notera en outre que toute autre méthode de mesure peut être utilisée, tant que les dents sont toutes mesurées de la même manière.

Une étape de marquage d'assemblage est ensuite réalisée (étape S2).

Lors de cette étape, une première paire de dents 111 est marquée sur la face d'assemblage 100B, opposée à la face de fabrication 100A, du premier étage 110 du pignon satellite 100. La première paire de dents 111 correspond à deux dents successives marquées le long de la circonférence du premier étage 110.

De la même façon, une deuxième paire de dents 112, et une troisième paire de dents 113 du premier étage 110 sont marquées, de préférence à intervalles réguliers, à partir de la position de la première paire de dents 111. Plus précisément, compte tenu du fait que, dans cet exemple, trois paires de dents du premier étage sont marquées, ces trois paires de dents sont espacées circonférentiellement l'une de l'autre de 120° environ, en tenant compte du fait que le nombre total de dents n'est pas nécessairement un multiple de trois. Ainsi, un même nombre de dents non marquées est de préférence disposé entre chacune des paires de dents 111, 112 et 113 marquées. De manière alternative, les dents, ou paires de dents marquées, pourraient ne pas être réparties à intervalles réguliers, tant que leur répartition est identique sur chaque pignon.

Pour réaliser ces marquages, des poinçons peuvent être réalisés sur les faces axiales des dents, par usinage par l'intermédiaire d'une fraise boule pour identifier localement la surface de la dent.

Un unique poinçon constitue un premier motif de marquage M1, deux poinçons adjacents sur une même dent constituent un deuxième motif de marquage M2, et trois poinçons adjacents sur une même dent constituent un troisième motif de marquage M3. Ces exemples ne sont pas limitatifs, d'autres motifs, comprenant par exemple quatre poinçons ou davantage, sont également envisageables.

On notera ainsi que, alors que les dents de la première paire de dent 111 sont marquées selon le premier motif M1, les dents de la deuxième paire de dents 112 sont marquées selon le deuxième motif M2, et les dents de la troisième paire de dents 123 sont marquées selon le troisième motif M3.

Par ailleurs, les marquages décrits ci-dessus réalisés sur le premier pignon satellites 100, sont également réalisés, de manière identique, sur les faces d'assemblage 200B, 300B des deuxième et troisième pignons satellites 200, 300.

Au cours de l'étape S2, trois dents du pignon central 40 sont également marquées. Plus précisément, une face axiale d'une première dent 41 du pignon central 40 est marquée selon le premier motif M1, puis une face axiale d'une deuxième dent 42 est marquée selon le deuxième motif M2, et enfin une face axiale d'une troisième dent 43 est marquée selon le troisième motif M3. De la même façon, chacune des dents 41, 42, 43 sont de préférence espacées circonférentiellement à intervalles réguliers, à 120° environ l'une de l'autre.

L'ordre dans lequel les différents marquages réalisés lors de l'étape S2 de marquage d'assemblage n'est pas limitatif, ces marquages pouvant être réalisé dans un ordre différent. Par exemple, les dents du pignon central 40 peuvent être marquées dans un premier temps, puis les dents des pignons satellites.

Lorsque l'étape S2 de marquage d'assemblage, comprenant les différents marquages décrits ci-dessus, est terminée, l'assemblage des différentes pièces est réalisé (étape S3). Cet assemblage est réalisé à partir des marquages réalisés à l'étape S2 précédente. En particulier, l'assemblage est réalisé de telle sorte que les dents de paires de dents marquées 111, 112, 113 du premier étage des pignons satellites 100, 200, 300 soient disposées de part et d'autre d'une des trois dents marquées 41, 42, 43 du pignon central 40, en respectant la correspondance des motifs de marquage.

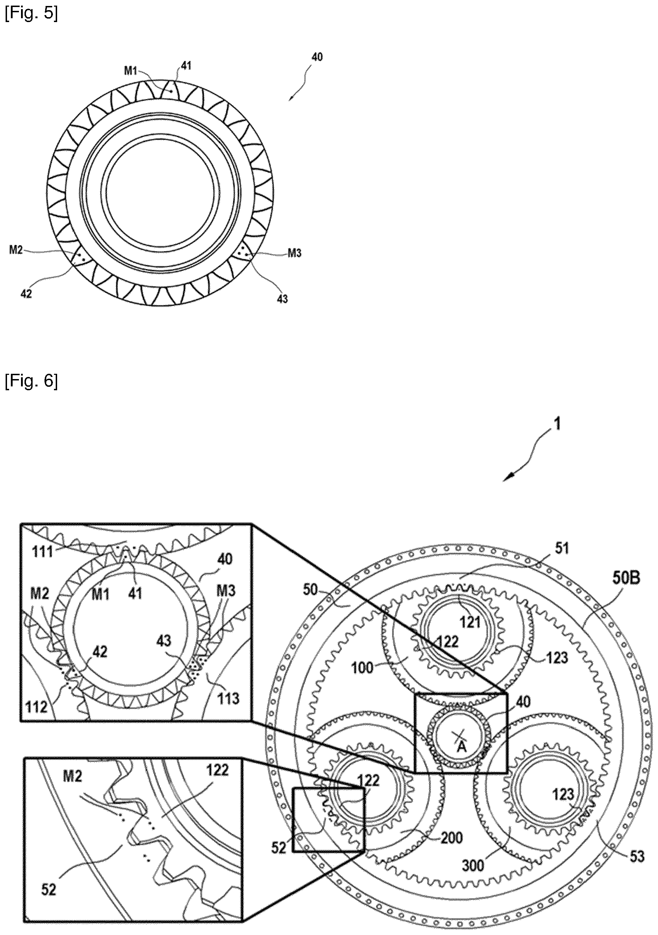

En d'autres termes, les dents marquées de la première paire de dents 111 d'un des pignons, marquées selon le premier motif de marquage M1, doivent être disposées de part et d'autre de la première dent marquée 41 du pignon central 40, également marqué selon le premier motif M1. De même, les dents marquées d'une deuxième paire de dents 112 d'un autre des pignons, marquées selon le deuxième motif de marquage M2, doivent être disposées de part et d'autre de la deuxième dent marquée 42 du pignon central 40, également marqué selon le premier deuxième motif de marquage M2. Enfin, les dents marquées d'une troisième paire de dents 113 du troisième pignon, marquées selon le troisième motif de marquage M3, doivent être disposées de part et d'autre de la troisième dent marquée 43 du pignon central 40, également marqué selon le troisième motif de marquage M3. Une fois que les trois pignons satellites ont été ainsi disposés autour du pignon central 40, les deux parties 50A, 50B de la couronne externe 50 sont ensuite disposées autour des pignons satellites. La figure 6 représente le réducteur mécanique 1 après l'étape d'assemble S3.

Dans l'exemple décrit ci-dessus, où la couronne externe 50 est en deux parties 50A, 50B, le marquage des dents du pignon central 40 et des dents du premier étage 110, 210, 310 de chaque pignon satellite 100, 200, 300 peut être suffisant pour permettre l'assemblage des différentes pièces à l'étape S3. Toutefois, des marquages peuvent également être réalisés au cours de l'étape S2 sur les dents du deuxième étage 120, 220, 320 de chaque pignon satellite 100, 200, 300, et sur les dents de la couronne 50, afin d'améliorer la fiabilité de la vérification du positionnement des différents pignons. Les figures 2 et 6 présentent un exemple dans lequel les dents de la couronne externe 50 et du deuxième étage de chaque pignon satellite sont marquées, en plus des dents du pignon central 40 et du premier étage de chaque pignon satellite.

Ainsi, trois paires de dents de la couronne externe 50, notamment de la partie 50B de la couronne externe, peuvent être marquées. Chacune des dents marquées d'une première paire de dents 51 est marquée selon le premier motif M1, chacune des dents marquées d'une deuxième paire de dents 52 est marquée selon le deuxième motif M2, et chacune des dents marquées d'une troisième paire de dents 53 est marquée selon le troisième motif M3. Par ailleurs, une première dent 121 du deuxième étage de chaque pignon satellite est marquée selon le premier motif M1, une deuxième dent 122 du deuxième étage de chaque pignon satellite est marquée selon le deuxième motif M2, et une troisième dent 123 du deuxième étage de chaque pignon satellite est marquée selon le troisième motif M3.

De la même façon, l'assemblage à l'étape S3 est réalisé de telle sorte que les dents de chaque paire de dents marquées 51, 52, 53 de la couronne externe 50 soient disposées de part et d'autre d'une des trois dents marquées 121, 122, 123 du deuxième étage des pignons satellites, en respectant la correspondance des motifs de marquage, selon le principe décrit au paragraphe précédent.

De préférence, dans le présent exposé, lorsqu'une roue dentée de grand diamètre engrène avec une roue dentée de plus petit diamètre, la roue dentée de plus grand diamètre comprend les dents marquées par paires, et la roue dentée de plus petit diamètre comprend les dents marqués isolément et disposées entre les dents des paires de dents marquées de la roue de plus grand diamètre. Ainsi, les dents de la couronne externe 50 sont marquées par paires, alors que les dents du deuxième étage 120 des pignons satellites, de diamètre plus petit que la couronne externe 50 et engrenant avec celle-ci, présentent des dents marquées isolément, de manière à être disposées entre deux dents des paires de dents de la couronne externe 50. De même, les dents du premier étage 110 des pignons satellites sont marquées par paires, alors que les dents du pignon central 40, de diamètre plus petit que le premier étage 110 et engrenant avec celui-ci, présentent des dents marquées isolément, de manière à être disposées entre deux dents des paires de dents du premier étage 110.

On notera par ailleurs que l'étape d'assemblage peut comprendre l'assemblage d'un porte satellite (non représenté).

Bien que le mode de réalisation décrit ci-dessus décrit un cas de figure dans lequel le réducteur mécanique 1 comprend trois pignons satellites, cet exemple n'est pas limitatif, et l'invention est également applicable à des réducteurs mécaniques comprenant quatre, cinq, ou davantage de pignons satellites à deux étages. En particulier, dans un réducteur mécanique comprenant quatre pignons satellites, chaque élément de ce réducteur mécanique (pignon satellites, pignon central et couronne externe) comprendra quatre dents, ou paires de dents marquées, espacées l'une de l'autre de 90°. De la même façon, dans un réducteur mécanique comprenant cinq pignons satellites, chaque élément de ce réducteur mécanique (pignon satellites, pignon central et couronne externe) comprendra cinq dents, ou paires de dents marquées, espacées l'une de l'autre de 72°.

## Revendications

1. Procédé de fabrication d'un réducteur mécanique (1) pour turbomachine d'aéronef, dans lequel N est un nombre prédéterminé tel que N≥3, le réducteur mécanique comprenant un pignon central (40) et une couronne externe (50) coaxiaux l'un avec l'autre autour d'un axe de rotation principal (A), et N pignons satellites (100, 200, 300), chacun étant mobile autour d'un axe de rotation secondaire (X1, X2, X3) parallèle à l'axe de rotation principal (A) et chacun comprenant un premier étage (110, 210, 310) engrenant avec le pignon central (40), et un deuxième étage (120, 220, 320) de diamètre inférieur au diamètre du premier étage engrenant avec la couronne externe (50), le procédé étant **caractérisé en ce qu'**il comprend :
- le marquage d'assemblage de pièces, dans lequel N dents (41, 42, 43) du pignon central (40) et N paires de dents (111) du premier étage de chaque pignon satellite sont marquées, et/ou N dents du deuxième étage (120) de chaque pignon satellite et N paires de dents de la couronne externe (50) sont marquées, les N pignons satellites étant chacun marqués de manière identique,
- l'assemblage du réducteur mécanique, de telle sorte que les dents des paires de dents (111) marquées du premier étage de chaque pignon satellite soient disposées de part et d'autre d'une dent marquée (41) du pignon central (40) et/ou de telle sorte que les dents des paires de dents (111) marquées de la couronne externe soient disposées de part et d'autre d'une dent marquée du deuxième étage de chaque pignon satellite.

2. Procédé selon la revendication 1, comprenant, avant le marquage d'assemblage, une étape préliminaire de marquage d'orientation de pièces dans lequel une dent (151, 152) du premier et du deuxième étage (110, 120) de chaque pignon satellite (100, 200, 300) est marquée, de telle sorte que l'orientation des dents marquées du premier et du deuxième étage l'une par rapport à l'autre soit identique pour chaque pignon satellite.

3. Procédé selon la revendication 2, dans lequel le marquage d'orientation est réalisé sur une première face (100A) de chaque pignon satellite (100, 200, 300), et le marquage d'assemblage est réalisé sur une deuxième face (100B), opposée à la première face, de chaque pignon satellite.

4. Procédé selon la revendication 2 ou 3, dans lequel le marquage d'orientation comprend, pour chaque pignon satellite (100, 200, 300), la fabrication des dents du premier étage (110), le marquage d'une dent (152) du premier étage fabriqué, la fabrication des dents du deuxième étage (120) puis, le marquage d'une dent (151) du deuxième étage.

5. Procédé selon la revendication 4, dans lequel un angle (θ) mesuré sur chaque pignon satellite (100, 200, 300) entre une droite (R') passant par l'axe de rotation secondaire (X1) des pignons satellites et la dent (152) marquée du premier étage, et une droite (R) passant par l'axe de rotation secondaire (X1) des pignons satellites et la dent (151) marquée du deuxième étage, est identique pour chacun desdits pignons satellites.

6. Procédé selon l'une quelconque des revendication 1 à 5, dans lequel la couronne externe (50) comprend deux parties distinctes (50A, 50B), le marquage d'assemblage comprenant dans un premier temps le marquage de N dents (41, 42, 43) du pignon central (40) autour de l'axe de rotation principal (A), et de N paires de dents (111) du premier étage de chaque pignon satellite, et l'assemblage du réducteur mécanique comprenant dans un premier temps la disposition des N pignons satellites autour du pignon central, de telle sorte que les dents des paires de dents (111) marquées du premier étage de chaque pignon satellite soient disposées de part et d'autre d'une dent marquée (41) du pignon central (40).

7. Procédé selon l'une quelconque des revendication 1 à 5, dans lequel le pignon central (40) comprend deux parties distinctes, le marquage d'assemblage comprenant dans un premier temps le marquage de N dents du deuxième étage (120) de chaque pignon satellite autour de l'axe de rotation secondaire (X1), et de N paires de dents de la couronne externe (50), et l'assemblage du réducteur mécanique comprenant dans un premier temps la disposition des N pignons satellites à l'intérieur de la couronne externe (50), de telle sorte que les dents des paires de dents marquées de la couronne externe soient disposées de part et d'autre d'une dent marquée du deuxième étage de chaque pignon satellite.

8. Procédé selon l'une quelconque des revendication 1 à 7, dans lequel le marquage d'assemblage comprend le marquage d'au moins un premier motif de marquage (M1), au moins un deuxième motif de marquage (M2) différent du premier motif de marquage, et au moins un troisième motif de marquage (M3) différent du premier et du deuxième motif de marquage, les dents étant marquées de telle sorte que, lors de l'assemblage du réducteur mécanique (1), les dents d'une paire de dents marquées présentent un motif de marquage identique au motif de marquage de la dent marquée disposée entre lesdites dents marquées de la paire de dents marquées.

9. Procédé selon la revendication 8, dans lequel le marquage d'une dent est réalisé par la formation d'un poinçon sur une face axiale de la dent, le premier motif de marquage (M1) comprenant un poinçon, le deuxième motif de marquage (M2) comprenant deux poinçons, et le troisième motif de marquage (M3) comprenant trois poinçons.

10. Procédé selon l'une quelconque des revendications 1 à 9, dans lequel le réducteur mécanique (1) comprend trois pignons satellites (100, 200, 300), trois dents (41, 42, 43) du pignon central (40) et/ou du deuxième étage (120) de chaque pignon satellite étant marquées de telle sorte qu'une droite passant par le centre du pignon satellite et/ou du pignon central et l'une des trois dents marquées forme un angle sensiblement égal à 120° par rapport aux droites passant par ledit centre du pignon satellite et/ou du pignon central et les deux autre dents marquées.

11. Procédé selon l'une quelconque des revendications 1 à 10, dans lequel le réducteur mécanique (1) est un réducteur à train épicycloïdal.

## Patentansprüche

1. Verfahren zur Herstellung eines mechanischen Reduziergetriebes (1) für eine Flugzeugturbomaschine, wobei N eine vorbestimmte Zahl wie N≥3 ist, wobei das mechanische Reduziergetriebe ein zentrales Zahnrad (40) und einen Außenkranz (50), die koaxial zueinander um eine Hauptrotationsachse (A) sind, und N Planetenräder (100, 200, 300) umfasst, die jeweils um eine Nebenrotationsachse (X1, X2, X3) parallel zu der Hauptrotationsachse (A) beweglich sind und jeweils eine erste Stufe (110, 210, 310), die mit dem zentralen Zahnrad (40) kämmt, und eine zweite Stufe (120, 220, 320) mit einem Durchmesser, der kleiner als der Durchmesser der ersten Stufe ist, die mit dem Außenkranz (50) kämmt, umfasst, wobei das Verfahren **dadurch gekennzeichnet ist, dass** es umfasst:
- Teilmontagemarkierung, wobei N Zähne (41, 42, 43) des zentralen Zahnrads (40) und N Paare von Zähnen (111) der ersten Stufe jedes Planetenrads markiert werden und/oder N Zähne der zweiten Stufe (120) jedes Planetenrads und N Paare von Zähnen des Außenkranzes (50) markiert werden, wobei die N Planetenräder jeweils auf identische Weise markiert werden,
- Montage des mechanischen Reduziergetriebes, sodass die markierten Zähne der Paare von Zähnen (111) der ersten Stufe jedes Planetenrads auf beiden Seiten eines markierten Zahns (41) des zentralen Zahnrads (40) angeordnet sind und/oder sodass die markierten Zähne der Paare von Zähnen (111) des Außenkranzes auf beiden Seiten eines markierten Zahns der zweiten Stufe jedes Planetenrads angeordnet sind.

2. Verfahren nach Anspruch 1, umfassend vor der Montagemarkierung einen vorbereitenden Schritt der Teilausrichtungsmarkierung, wobei ein Zahn (151, 152) der ersten und der zweiten Stufe (110, 120) jedes Planetenrads (100, 200, 300) markiert wird, sodass die Ausrichtung der markierten Zähne der ersten und der zweiten Stufe in Bezug zueinander für jedes Planetenrad identisch ist.

3. Verfahren nach Anspruch 2, wobei die Ausrichtungsmarkierung auf einer ersten Fläche (100A) jedes Planetenrads (100, 200, 300) umgesetzt wird und die Montagemarkierung auf einer zweiten Fläche (100B) gegenüber der ersten Fläche jedes Planetenrads umgesetzt wird.

4. Verfahren nach Anspruch 2 oder 3, wobei die Ausrichtungsmarkierung für jedes Planetenrad (100, 200, 300) die Herstellung der Zähne der ersten Stufe (110), die Markierung eines hergestellten Zahns (152) der ersten Stufe, die Herstellung der Zähne der zweiten Stufe (120), dann die Markierung eines Zahns (151) der zweiten Stufe umfasst.

5. Verfahren nach Anspruch 4, wobei ein Winkel (θ) gemessen an jedem Planetenrad (100, 200, 300) zwischen einer geraden Linie (R'), die durch die Nebenrotationsachse (X1) der Planetenräder verläuft, und dem markierten Zahn (152) der ersten Stufe und einer geraden Linie (R), die durch die Nebenrotationsachse (X1) der Planetenräder verläuft, und dem markierten Zahn (151) der zweiten Stufe für jedes der Planetenräder identisch ist.

6. Verfahren nach einem der Ansprüche 1 bis 5, wobei der Außenkranz (50) zwei unterschiedliche Teile (50A, 50B) umfasst, die Montagemarkierung zunächst die Markierung von N Zähnen (41, 42, 43) des zentralen Zahnrads (40) um die Hauptrotationsachse (A) und von N Paaren von Zähnen (111) der ersten Stufe jedes Planetenrads umfasst und die Montage des mechanischen Reduziergetriebes zunächst die Anordnung der N Planetenräder um das zentrale Zahnrad umfasst, sodass die markierten Zähne der Paare von Zähnen (111) der ersten Stufe jedes Planetenrads auf beiden Seiten eines markierten Zahns (41) des zentralen Zahnrads (40) angeordnet sind.

7. Verfahren nach einem der Ansprüche 1 bis 5, wobei das zentrale Zahnrad (40) zwei unterschiedliche Teile umfasst, die Montagemarkierung zunächst die Markierung von N Zähnen der zweiten Stufe (120) jedes Planetenrads um die Nebenrotationsachse (X1) und von N Paaren von Zähnen des Außenkranzes (50) umfasst und die Montage des mechanischen Reduziergetriebes zunächst die Anordnung der N Planetenräder innerhalb des Außenkranzes (50) umfasst, sodass die markierten Zähne der Paare von Zähnen des Außenkranzes auf beiden Seiten eines markierten Zahns der zweiten Stufe jedes Planetenrads angeordnet sind.

8. Verfahren nach einem der Ansprüche 1 bis 7, wobei die Montagemarkierung das Markieren mit mindestens einem ersten Markierungsmuster (M1), mindestens einem zweiten Markierungsmuster (M2), das sich von dem ersten Markierungsmuster unterscheidet, und mindestens einem dritten Markierungsmuster (M3), das sich von dem ersten und dem zweiten Markierungsmuster unterscheidet, umfasst, wobei die Zähne markiert werden, sodass während der Montage des mechanischen Reduziergetriebes (1) die markierten Zähne eines Paares von Zähnen ein Markierungsmuster aufweisen, das mit dem Markierungsmuster des markierten Zahns, der zwischen den markierten Zähnen des markierten Paares von Zähnen angeordnet ist, identisch ist.

9. Verfahren nach Anspruch 8, wobei die Markierung eines Zahns durch die Bildung eines Stempels auf einer axialen Fläche des Zahns umgesetzt wird, wobei das erste Markierungsmuster (M1) einen Stempel umfasst, das zweite Markierungsmuster (M2) zwei Stempel umfasst und das dritte Markierungsmuster (M3) drei Stempel umfasst.

10. Verfahren nach einem der Ansprüche 1 bis 9, wobei das mechanische Reduziergetriebe (1) drei Planetenräder (100, 200, 300) umfasst, wobei drei Zähne (41, 42, 43) des zentralen Zahnrads (40) und/oder der zweiten Stufe (120) jedes Planetenrads markiert werden, sodass eine gerade Linie, die durch die Mitte des Planetenrads und/oder des zentralen Zahnrads verläuft, und einer der drei markierten Zähne einen Winkel bilden, der im Wesentlichen gleich 120 ° in Bezug auf die geraden Linien ist, die durch die Mitte des Planetenrads und/oder des zentralen Zahnrads und die zwei anderen markierten Zähne verlaufen.

11. Verfahren nach einem der Ansprüche 1 bis 10, wobei das mechanische Reduziergetriebe (1) ein Reduziergetriebe mit Umlaufgetriebe ist.

## Claims

1. A method for manufacturing a mechanical reducer (1) for an aircraft turbomachine, wherein N is a predetermined number such that N≥3, the mechanical reducer (1) comprising a central pinion (40) and an outer crown (50) coaxial with each other around a main axis of rotation (A), and N planet pinions (100, 200, 300), each being movable about a secondary axis of rotation (X1, X2, X3) parallel to the main axis of rotation (A) and each comprising a first stage (110, 210, 310) meshing with the central pinion (40), and a second stage (120, 220, 320) with a diameter smaller than the diameter of the first stage meshing with the outer crown (50), the method being **characterized in that** it comprises:
- the part assembly marking, in which N teeth (41, 42, 43) of the central pinion (40) and N pairs of teeth (111) of the first stage of each planet pinion are marked, and/or N teeth of the second stage (120) of each planet pinion and N pairs of teeth of the outer crown (50) are marked, the N planet pinions each being marked identically,
- the assembly of the mechanical reducer, so that the teeth of the pairs of marked teeth (111) of the first stage of each planet pinion are disposed on either side of a marked tooth (41) of the central pinion (40) and/or so that the teeth of the pairs of marked teeth (111) of the outer crown are disposed on either side of a marked tooth of the second stage of each planet pinion.

2. The method according to claim 1, comprising, before the assembly marking, a preliminary step of marking the orientation of parts in which a tooth (151, 152) of the first and the second stage (110, 120) of each planet pinion (100, 200, 300) is marked, so that the orientation of the marked teeth of the first and second stage relative to each other is identical for each planet pinion.

3. The method according to claim 2, wherein the orientation marking is made on a first face (100A) of each planet pinion (100, 200, 300), and the assembly marking is made on a second face (100B), opposite the first face, of each planet pinion.

4. The method according to claim 2 or 3, wherein the orientation marking comprises, for each planet pinion (100, 200, 300), the manufacture of the teeth of the first stage (110), the marking of a tooth (152) of the first manufactured stage, the manufacture of the teeth of the second stage (120) then, the marking of a tooth (151) of the second stage.

5. The method according to claim 4, wherein an angle (θ) measured on each planet pinion (100, 200, 300) between a straight line (R⁷) passing through the secondary axis of rotation (X1) of the planet pinions and the marked tooth (152) of the first stage, and a straight line (R) passing through the secondary axis of rotation (X1) of the planet pinions and the marked tooth (151) of the second stage, is identical for each of said planet pinions.

6. The method according to any one of claims 1 to 5, wherein the outer crown (50) comprises two separate portions (50A, 50B), the assembly marking initially comprising the marking of N teeth (41, 42, 43) of the central pinion (40) around the main axis of rotation (A), and N pairs of teeth (111) of the first stage of each planet pinion, and the assembly of the mechanical reducer initially comprising disposing the N planet pinions around the central pinion, such that the teeth of the pairs of marked teeth (111) of the first stage of each planet pinion are disposed on either side of a marked tooth (41) of the central pinion (40).

7. The method according to any one of claims 1 to 5, wherein the central pinion (40) comprises two separate portions, the assembly marking initially comprising the marking of N teeth of the second stage (120) of each planet pinion around the secondary axis of rotation (X1), and of N pairs of teeth of the outer crown (50), and the assembly of the mechanical reducer initially comprising disposing the N planet pinions inside the outer crown (50), such that the teeth of the pairs of marked teeth of the outer crown are disposed on either side of a marked tooth of the second stage of each planet pinion.

8. The method according to any one of claims 1 to 7, wherein the assembly marking comprises the marking of at least a first marking pattern (M1), at least a second marking pattern (M2) different from the first marking pattern, and at least a third marking pattern (M3) different from the first and from the second marking pattern, the teeth being marked in such a way that, during assembly of the mechanical reducer (1), the teeth of a pair of marked teeth have a marking pattern identical to the marking pattern of the marked tooth disposed between said marked teeth of the pair of marked teeth.

9. The method according to claim 8, wherein the marking of a tooth is carried out by the formation of a punch on an axial face of the tooth, the first marking pattern (M1) comprising one punch, the second marking pattern (M2) comprising two punches, and the third marking pattern (M3) comprising three punches.

10. The method according to any one of claims 1 to 9, wherein the mechanical reducer (1) comprises three planet pinions (100, 200, 300), three teeth (41, 42, 43) of the central pinion (40) and/or of the second stage (120) of each planet pinion each being marked so that a straight line passing through the center of the planet pinion and/or the central pinion and one of the three marked teeth form an angle substantially equal to 120° with respect to the straight lines passing through said center of the planet pinion and/or the central pinion and the other two marked teeth.

11. The method according to any one of claims 1 to 10, wherein the mechanical reducer (1) is an epicyclic gear reducer.
